# EUROPÄISCHE PATENTSCHRIFT

(11) **EP 3 601 772 B1**
(45) Veröffentlichungstag und Bekanntmachung des Hinweises auf die Patenterteilung: **23.02.2022**
(21) Anmeldenummer: 18713616.3
(22) Anmeldetag: 21.03.2018
(51) Int. Cl.: F02D 41/14, F02D 13/02, F02D 41/00

(54) **VERFAHREN ZUM BETREIBEN EINER BRENNKRAFTMASCHINE UND BRENNKRAFTMASCHINE**
METHOD FOR OPERATING AN INTERNAL COMBUSTION ENGINE, AND INTERNAL COMBUSTION ENGINE
PROCÉDÉ POUR FAIRE FONCTIONNER UN MOTEUR À COMBUSTION INTERNE ET MOTEUR À COMBUSTION INTERNE

(30) Priorität: 24.03.2017 DE 102017205034
(43) Veröffentlichungstag der Anmeldung: 05.02.2020
(73) Patentinhaber: Rolls-Royce Solutions GmbH, 88045 Friedrichshafen (DE)
(72) Erfinder: SCHALK, Johannes, 88046 Friedrichshafen (DE); FIMML, Wolfgang, 6212 Maurach am Achensee (AT); FREY, Christian, 88682 Salem-Rickenbach (DE)
(74) Vertreter: Kordel, Mattias
(86) Internationale Anmeldenummer: PCT/EP2018/057199
(87) Internationale Veröffentlichungsnummer: WO 2018/172421

(56) Entgegenhaltungen:
- EP-A1- 0 433 632
- DE-A1- 4 236 008
- DE-A1- 10 139 941
- DE-A1- 19 530 274
- DE-A1- 19 546 453
- JP-A- 2001 090 563
- US-A- 2 717 583
- US-A1- 2002 121 266
- US-A1- 2009 194 080
- US-A1- 2010 236 238
- US-B1- 6 273 076

## Beschreibung

Die Erfindung betrifft ein Verfahren zum Betreiben einer Brennkraftmaschine sowie eine Brennkraftmaschine.

Beispielsweise aus der europäischen Patentschrift EP 2 598 739 B1 ist es bekannt, eine interne Abgasrückführung durch geeignete Vorgabe eines Öffnungszeitpunkts eines Einlassventils zu beeinflussen. Es ist grundsätzlich auch möglich, eine einem Brennraum einer Brennkraftmaschine zugeführte Frischmasse durch Vorgabe eines Schließzeitpunkts für ein Einlassventil zu bestimmen. Dabei hat der Schließzeitpunkt des Einlassventils jedoch einen großen Einfluss auf Stickoxid-Emissionen der Brennkraftmaschine. Daher kann es vorteilhaft sein, eine Regelung eines Lambdawerts für den Brennraum von einer Regelung der Stickoxid-Emissionen insoweit zu entkoppeln, als die Stickoxid-Emissionen über den Schließzeitpunkt des Einlassventils geregelt werden, wobei die Lambdaregelung bei einer aufgeladenen Brennkraftmaschine über einen Abgasturbinenbypass erfolgt. Eine solche Ausgestaltung ist aber aufwendig und teuer, insbesondere weil es zusätzlicher Bauteile und einer zusätzlichen Logik bedarf, um den Abgasturbinenbypass mit einem darin angeordneten Regelelement bereitzustellen, und um das Regelelement, beispielsweise eine Bypassklappe, anzusteuern.

Patentschriften DE 42 36 008 A1 und DE 195 30 274 A1 offenbaren Verfahren zur LambdaRegelung über den Öffnungszeitpunkt des Einlassventils. In Patentschrift US 6 273 076 B1 wird eine Brennkraftmaschine mit Abgasturbolader offenbart und es wird erwähnt, die Stickoxid-Emission über den Schließzeitpunkt des Einlassventils zu beeinflussen. Patentschrift JP 2001 090563 A offenbart ein Verfahren zur Lambda- und Stickoxid-Regelung, wobei der Phasenwinkel des Einlassventils verstellt wird in Abhängigkeit der Stickoxid-Emissionen und des Lambda-Schwellwerts für Vermeidung von Russbildung.

Der Erfindung liegt die Aufgabe zugrunde, ein Verfahren zum Betreiben einer Brennkraftmaschine sowie eine Brennkraftmaschine zu schaffen, welche die genannten Nachteile nicht aufweist.

Die Aufgabe wird gelöst, indem die Gegenstände der unabhängigen Ansprüche geschaffen werden. Vorteilhafte Ausgestaltungen ergeben sich aus den Unteransprüchen.

Die Aufgabe wird insbesondere gelöst, indem ein Verfahren zum Betreiben einer Brennkraftmaschine geschaffen wird, welches folgende Schritte aufweist: Für eine Verbrennung in einem Brennraum einer Brennkraftmaschine wird ein Soll-Lambdawert bestimmt, und ein Ist-Lambdawert wird gemessen. Ein Öffnungszeitpunkt für ein dem Brennraum zugeordnetes Einlassventil wird in Abhängigkeit von dem Soll-Lambdawert und in Abhängigkeit von dem Ist-Lambdawert bestimmt. Das Einlassventil wird zu dem bestimmten Öffhungszeitpunkt geöffnet. Dies ermöglicht zum einen eine Entkopplung der Regelung von Stickoxid-Emissionen von einer Lambdaregelung für die Brennkraftmaschine, weil nämlich die Stickoxid-Emissionen über den Schließzeitpunkt des Einlassventils beeinflusst werden können, wobei der Lambdawert über den Öffnungszeitpunkt beeinflusst wird. Beide Parameter, also der Lambdawert und die Stickoxid-Emissionen, können somit unabhängig voneinander geregelt werden. Zum anderen bedarf es hierfür keiner zusätzlichen Bauteile, wie beispielsweise eines Abgasturbinenbypass und eines darin angeordneten Regelorgans, sowie keiner komplizierten Ansteuerung solcher Bauteile. Die Brennkraftmaschine kann insgesamt einfacher und kostengünstiger aufgebaut sein. Zur Einstellung des Öffnungszeitpunkts ist dem Einlassventil bevorzugt ein variabler Ventiltrieb zugeordnet, der aber typischerweise ohnehin vorgesehen ist, insbesondere um die Stickoxid-Emissionen regeln zu können. Es bedarf also insoweit keiner zusätzlichen Bauteile oder Maßnahmen.

Unter einem Lambdawert wird - in für sich genommen üblicher und bekannter Weise - eine Größe verstanden, die das Verbrennungsluft-Brennstoff-Verhältnis in dem Brennraum mit Bezug auf ein stöchiometrisches Verbrennungsluft-Brennstoff-Verhältnis angibt. Dabei ist der Lambdawert für ein stöchiometrisches Verbrennungsluft-Brennstoff-Verhältnis in dem Brennraum gleich 1. Ist ein Überschuss an Verbrennungsluft vorhanden, weist also der Brennraum ein mageres Gemisch auf, ist der Lambdawert größer als 1. Ist dagegen ein Überschuss von Brennstoff in dem Brennraum enthalten, liegt also ein fettes Gemisch vor, ist der Lambdawert kleiner als 1.

Im Rahmen des Verfahrens wird bevorzugt eine Regelung des Lambdawerts, die kurz auch als Lambdaregelung bezeichnet wird, durchgeführt. Dabei erfolgt die Regelung des Lambdawerts, insbesondere die Einregelung des Ist-Lambdawerts auf den bestimmten Soll-Lambdawert, durch Verstellen des Öffhungszeitpunkts des wenigstens einen Einlassventils als Stellgröße.

Ein Soll-Stickoxidanteil für das Abgas der Verbrennung in dem Brennraum wird bestimmt, wobei ein Ist-Stickoxidanteil in dem Abgas gemessen wird. Es wird ein Schließzeitpunkt für das Einlassventil in Abhängigkeit von dem Soll-Stickoxidanteil und in Abhängigkeit von dem Ist-Stickoxidanteil bestimmt, und das Einlassventil wird zu dem bestimmten Schließzeitpunkt geschlossen. Auf diese Weise können die Stickoxid-Emissionen der Brennkraftmaschine über den Schließzeitpunkt des Einlassventils eingestellt, vorzugsweise geregelt werden, wie dies bereits zuvor erläutert wurde. Insbesondere erfolgt derart eine Entkopplung der Lambdaregelung einerseits und der Stickoxid-Regelung andererseits, indem die Lambdaregelung über den Öffnungszeitpunkt des Einlassventils als Stellgröße erfolgt, wobei die Stickoxid-Regelung über den Schließzeitpunkt des Einlassventils als Stellgröße erfolgt. Bevorzugt wird also insbesondere der Stickoxidanteil in dem Abgas des wenigstens einen Brennraums geregelt, insbesondere wird der Ist-Stickoxidanteil auf den Soll-Stickoxidanteil eingeregelt, indem der Schließzeitpunkt des Einlassventils als Stellgröße verändert wird.

Unter einer Entkopplung wird hier verstanden, dass die Lambdaregelung einerseits und die Stickoxid-Regelung andererseits über verschiedene Stellgrößen erfolgt. Dabei besteht allerdings grundsätzlich noch eine gewisse Abhängigkeit insbesondere des Lambdawerts von dem Schließzeitpunkt.

Es wird daher eine kaskadierte Regelung oder eine kombinierte Mehrgrößenregelung derart durchgeführt, dass zunächst durch Variation des Öffnungszeitpunkts des Einlassventils die Lambdaregelung eingeregelt wird, wobei danach - bei festgehaltener erster Stellgröße - die Stickoxid-Regelung, durch Variation des Schließzeitpunkts des Einlassventils eingeregelt wird.

Gemäß einer nicht der Erfindung entsprechenden Variante, werden zunächst die Stickoxid-Emissionen durch Variation des Schließzeitpunkts des Einlassventils eingeregelt. Danach erfolgt eine Ausregelung der hierdurch entstandenen Verschiebung des Lambdawerts durch Variation des Öffnungszeitpunkts des Einlassventils.

Es ist möglich, dass das Verfahren iterativ durchgeführt wird, wobei nach der Ausregelung der zweiten Größe eine Nachregelung der ersten Größe erfolgt, was grundsätzlich zyklisch so fortgesetzt werden kann, insbesondere bis die den verschiedenen Größen zugeordneten Sollwerte in einem vorbestimmten Maß eingeregelt sind.

Unter einem Stickoxidanteil wird hier insbesondere eine Stickoxidkonzentration und/oder ein Stickoxidpartialdruck im Abgas des wenigstens einen Brennraums verstanden. Dabei kann es sich um eine Konzentration oder einen Partialdruck von Stickstoffmonoxid, von Stickstoffdioxid, oder um eine Gesamtkonzentration oder einen Gesamtpartialdruck als Summe der jeweiligen Anteile von Stickstoffmonoxid und Stickstoffdioxid handeln.

Gemäß einer Weiterbildung der Erfindung ist vorgesehen, dass der bestimmte Öffhungszeitpunkt innerhalb eines Ansaugtakts des Brennraums zur Verringerung des Ist-Lambdawerts nach spät verstellt wird, wobei der bestimmte Öffnungszeitpunkt innerhalb des Ansaugtakts zur Erhöhung des Ist-Lambdawerts nach früh verstellt wird. Dabei beziehen sich die Begriffe spät und früh auf einen Kurbelwellenwinkel der vorzugsweise als Hubkolbenmotor ausgebildeten Brennkraftmaschine, wobei in dem Brennraum ein Kolben hubbeweglich zwischen einem oberen Totpunkt und einem unteren Totpunkt verlagerbar ist, wobei der Ansaugtakt eine Hubbewegung des Kolben von dem oberen Totpunkt hin zu dem unteren Totpunkt umfasst, wobei der Begriff spät einen Zeitpunkt oder Kurbelwellenwinkel kennzeichnet, der näher an dem unteren Totpunkt des Kolbens gelegen ist, als ein Zeitpunkt, der durch den Begriff früh gekennzeichnet ist. Wird - bei festgehaltenem Schließzeitpunkt des Einlassventils - dieses in dem Ansaugtakt früher geöffnet, kann eine größere Luftmasse in den Brennraum gefördert werden, als wenn das Einlassventil später geöffnet wird. Bei gegebener Brennstoffzufuhr und festgehaltenem Schließzeitpunkt führt also eine spätere Öffnung des Einlassventils zu einem fetteren Gemisch, d. h. einer Verringerung des Ist-Lambdawerts, wobei eine frühere Öffnung zu einem magereren Gemisch führt, mithin zu einer Erhöhung des Ist-Lambdawerts. Auf diese Weise kann insbesondere eine Lambdaregelung durch Variation des Öffhungszeitpunkts des Einlassventils durchgeführt werden.

Alternativ oder zusätzlich ist bevorzugt vorgesehen, dass der bestimmte Öffnungszeitpunkt einem Einlassventilhub zugeordnet ist, der zusätzlich zu einem Gaswechselhub des Einlassventils durchgeführt wird. Das Einlassventil führt also zwei - vorzugsweise separate und insbesondere vollständige - Ventilhübe durch, nämlich einen Gaswechselhub zur Zuführung von Frischmasse in den Brennraum, und zusätzlich den weiteren Einlassventilhub zur Einstellung des Lambdawerts. Dabei wird der bestimmte Öffhungszeitpunkt zur Einstellung des Lambdawerts außerhalb des Ansaugtakts gewählt, insbesondere in einem Auslasstakt und/oder in einem Verdichtungstakt des Brennraums.

Wird der zusätzliche Einlassventilhub mit dem bestimmten Öffnungszeitpunkt in dem Auslasstakt durchgeführt, kann Abgas aus dem Brennraum in einen Ladepfad der Brennkraftmaschine über das Einlassventil ausgeschoben werden, wobei dieses Abgas dann in dem folgenden Ansaugtakt während des Gaswechselhubs des Einlassventils in den Brennraum zurückgefördert wird. Das Abgas wird somit quasi im Ladepfad vorgelagert. Dabei wird eine entsprechend verringerte Luftmasse in den Brennraum gefördert, was wiederum den Lambdawert beeinflusst. Diese Vorlagerung von Abgas im Ladepfad führt auch unter anderem in einem nachfolgenden Arbeitstakt zu einem höheren Intertgasanteil im Brennraum. Dies wirkt sich - ähnlich einer externen Abgasrückführung - mindernd auf das Verbrennungstemperaturniveau aus, was eine Reduktion der spezifischen Stickoxid-Emissionen zur Folge hat.

Wird der zusätzliche Einlassventilhub mit dem bestimmten Öffnungszeitpunkt in dem Verdichtungstakt des Brennraums durchgeführt, wird ein Teil der in dem Ansaugtakt angesaugten Verbrennungsluft wieder in den Ladepfad ausgeschoben, sodass die in dem Brennraum angeordnete Luftmasse reduziert und damit zugleich auch der Lambdawert beeinflusst wird.

Ist der bestimmte Öffnungszeitpunkt einem weiteren, zusätzlichen Einlassventilhub zugeordnet, ist es möglich, dass der Öffnungszeitpunkt des zusätzlichen Einlassventilhubs selbst nicht variiert wird, wobei für die Lambdaregelung vielmehr auch der dem zusätzlichen Einlassventilhub zugeordnete Schließzeitpunkt und/oder der Hubweg, d. h. die Hubamplitude des Einlassventils, variiert werden können. Insbesondere ist es aber möglich, zum Zwecke der Lambdaregelung den zusätzlichen Einlassventilhub entweder vorzusehen oder wegzulassen, und/oder den zusätzlichen Einlassventilhub wahlweise im Auslasstakt oder im Verdichtungstakt durchzuführen.

Die Brennkraftmaschine ist vorzugsweise als Viertaktmotor ausgebildet, wobei dem Brennraum in für sich genommen bekannter Weise pro Arbeitszyklus vier Takte zugeordnet sind, nämlich ein Ansaugtakt, ein Verdichtungstakt, ein Arbeits- oder Verbrennungstakt, und ein Auslasstakt. Die hier beschriebenen Zeitpunkte, insbesondere der Öffnungszeitpunkt und der Schließzeitpunkt des Einlassventils, beziehen sich dabei auf insbesondere durch den Kurbelwellenwinkel der Brennkraftmaschine beschriebene Zeiten innerhalb periodisch wiederkehrender Arbeitszyklen.

Dass der Gaswechselhub und der zusätzliche Einlassventilhub vorzugsweise voneinander getrennt sind, bedeutet insbesondere, dass das Einlassventil zwischen dem Gaswechselhub und dem zusätzlichen Einlassventilhub vollständig schließt. Es handelt sich also bevorzugt um voneinander getrennte, separate Hubbewegungen des Einlassventils und bevorzugt nicht um Teilhübe eines einzigen Hubereignisses.

Der Schließzeitpunkt des Einlassventils, welcher als Stellgröße für die Stickoxidregelung verwendet wird, ist bevorzugt dem Gaswechselhub zugeordnet. Auf diese Weise kann der für sich genommen bekannte Miller-Effekt zur Beeinflussung der Stickoxid-Emissionen der Brennkraftmaschine genutzt werden. Weiter findet auf diese Weise eine weitergehende Separierung der Stickoxidregelung einerseits und der Lambdaregelung andererseits voneinander statt, indem die Stickoxidregelung dem Gaswechselhub zugeordnet ist, wobei die Lambdaregelung dem zusätzlichen Einlassventilhub zugeordnet ist.

Die Aufgabe wird auch gelöst, indem eine Brennkraftmaschine geschaffen wird, die wenigstens einen Brennraum aufweist, dem wenigstens ein Einlassventil zur Zuführung von Frischmasse in den wenigstens einen Brennraum zugeordnet ist. Die Brennkraftmaschine weist außerdem eine Lambdawert-Einstelleinrichtung auf, die eingerichtet ist, um einen Lambdawert für eine Verbrennung in dem wenigstens einen Brennraum einzustellen. Die Lambdawert-Einstelleinrichtung ist mit dem wenigstens einen Einlassventil wirkverbunden und eingerichtet, um einen Ist-Lambdawert für den wenigstens einen Brennraum durch Bestimmen eines Öffhungszeitpunkts des wenigstens einen Einlassventils einzustellen. In Zusammenhang mit der Brennkraftmaschine ergeben sich insbesondere die Vorteile, die bereits in Zusammenhang mit dem Verfahren erläutert wurden. Die Brennkraftmaschine ist bevorzugt eingerichtet zur Durchführung eines Verfahrens nach einem der zuvor beschriebenen Ausführungsformen.

Die Lambdawert-Einstelleinrichtung ist bevorzugt eingerichtet zur Regelung des Lambdawerts, also für eine Lambdaregelung, wobei der Öffnungszeitpunkt des wenigstens einen Einlassventils als Stellgröße verwendet wird, um den Ist-Lambdawert auf einen bestimmten Soll-Lambdawert einzuregeln.

Vorzugsweise weist die Brennkraftmaschine eine Lambdawert-Messeinrichtung, insbesondere eine Lambdasonde, zur Messung des Ist-Lambdawerts auf, sowie außerdem bevorzugt ein Bestimmungsglied zur Bestimmung eines Soll-Lambdawerts, der besonders bevorzugt abhängig von einem Betriebs- oder Lastpunkt der Brennkraftmaschine bestimmt wird.

Die Brennkraftmaschine weist vorzugsweise einen Ladedrucksensor zur Erfassung eines Ladedrucks in einem Ladepfad stromaufwärts des wenigstens einen Einlassventils, sowie einen Ladeluft-Temperatursensor zur Erfassung einer Ladelufttemperatur stromaufwärts des wenigstens einen Einlassventils auf. Mithilfe des erfassten Ladedrucks und der erfassten Ladelufttemperatur ist es dann über eine für sich genommen bekannte Gasgleichung, beispielsweise über die allgemeine Gasgleichung, möglich, einen geeigneten Öffnungszeitpunkt für das Einlassventil zu bestimmen, um den gewünschten Lambdawert einzustellen.

Die Brennkraftmaschine weist eine Stickoxidanteil-Einstelleinrichtung auf, die eingerichtet ist, um einen Stickoxid-Anteil für Abgas der Verbrennung in dem wenigstens einen Brennraum einzustellen. Die Stickoxidanteil-Einstelleinrichtung ist mit dem wenigstens einen Einlassventil wirkverbunden und eingerichtet, um einen Ist-Stickoxidanteil für den wenigstens einen Brennraum durch Variation eines Schließzeitpunkts des wenigstens einen Einlassventils einzustellen. Dabei ist die Stickoxidanteil-Einstelleinrichtung bevorzugt eingerichtet, um den Stickoxid-Anteil in dem Abgas des wenigstens einen Brennraums zu regeln, wobei der Schließzeitpunkt des Einlassventils als Stellgröße verwendet wird.

Gemäß einer Weiterbildung der Erfindung ist vorgesehen, dass die Lambdawert-Einstelleinrichtung eingerichtet ist, um den Öffnungszeitpunkt des Einlassventils innerhalb eines Ansaugtakts des wenigstens einen Brennraums zur Verringerung des Ist-Lambdawerts nach spät und zur Erhöhung des Ist-Lambdawerts nach früh zu verstellen.

Alternativ oder zusätzlich ist die Lambdawert-Einstelleinrichtung bevorzugt eingerichtet, um einen zusätzlichen Einlassventilhub zusätzlich zu einem Gaswechselhub des Einlassventils durchzuführen, wobei der durch die Lambdawert-Einstelleinrichtung bestimmte Öffnungszeitpunkt dem zusätzlichen Einlassventilhub zugeordnet ist, wobei ein Öffhungshub des Einlassventils zu dem Öffnungszeitpunkt außerhalb des Ansaugtakts durchgeführt wird, insbesondere in einem Auslasstakt und/oder in einem Verdichtungstakt des Brennraums. Dabei ist es auch möglich, dass die Lambdawert-Einstelleinrichtung eingerichtet ist, um einen dem zusätzlichen Einlassventilhub zugeordneten Schließzeitpunkt zum Zweck der Lambdaregelung zu variieren.

Gemäß einer Weiterbildung der Erfindung ist vorgesehen, dass dem wenigstens einen Einlassventil ein Ventiltrieb zugeordnet ist, der eine hydraulische Unterbrechungseinrichtung aufweist. Mittels der hydraulischen Unterbrechungseinrichtung kann dabei eine Wirkverbindung zwischen einem Betätigungsmittel für das Einlassventil, beispielsweise einem Betätigungsnocken, und dem Einlassventil zeitweise unterbrochen werden. Eine solche hydraulische Unterbrechungseinrichtung wird auch als Lost Motion-System bezeichnet und ist für sich genommen bekannt, sodass auf deren Ausgestaltung nicht weiter im Detail eingegangen wird. Mithilfe der hydraulischen Unterbrechungseinrichtung kann ein variabler Ventiltrieb, insbesondere ein vollvariabler Ventiltrieb, bereitgestellt werden, wobei es insbesondere möglich ist, sowohl den Öffhungszeitpunkt des Einlassventils als auch den Schließzeitpunkt desselben unabhängig voneinander mithilfe der hydraulischen Unterbrechungseinrichtung zu beeinflussen. Insgesamt ermöglicht die hydraulische Unterbrechungseinrichtung eine vollständige Modulation der Ventilhubkurve für das Einlassventil, wobei nicht nur die Öffhungs- und Schließzeitpunkte verstellt, sondern auch der Hubweg variiert werden kann/können.

Gemäß einer Weiterbildung der Erfindung ist vorgesehen, dass dem wenigstens einen Einlassventil wenigstens zwei Betätigungsnocken zugeordnet sind, die zueinander phasenverschobene Betätigungskonturen aufweisen. Unter einer Betätigungskontur wird dabei eine Kontur einer äußeren Umfangsfläche eines Betätigungsnockens verstanden, die einen Ventilhub bewirkt, wenn die Betätigungskontur des Betätigungsnockens in Eingriff mit einem Betätigungselement kommt, auf welchem der Betätigungsnocken abrollt. Dass die Betätigungskonturen der Betätigungsnocken zueinander phasenverschoben sind, bedeutet insbesondere, dass die Betätigungskonturen relativ zueinander so angeordnet sind, dass sie jeweils einen Ventilhub zu verschiedenen Zeiten, d. h. insbesondere in verschiedenen Kurbelwellenwinkelbereichen, besonders bevorzugt in voneinander getrennten Kurbelwellenwinkelbereichen, bewirken. Mithilfe der beiden Betätigungsnocken und der zueinander phasenverschobenen Betätigungskonturen ist es ohne weiteres möglich, zusätzlich zu einem Gaswechselhub des Einlassventils einen weiteren, zusätzlichen Einlassventilhub zu ermöglichen.

Alternativ oder zusätzlich ist dem wenigstens einen Einlassventil bevorzugt ein Betätigungsnocken zugeordnet, der an seiner Umfangsfläche zwei separate Ventilhubflächenbereiche aufweist. Unter einem Ventilhubflächenbereich wird dabei ein Bereich der Umfangsfläche des Betätigungsnockens bezeichnet, der eingerichtet ist, um einen Ventilhub des Einlassventils zu bewirken, wenn der Betätigungsnocken mit dem Ventilhubflächenbereich auf einem Betätigungselement abrollt. Mithilfe eines zwei separate Ventilhubflächenbereiche aufweisenden Betätigungsnockens ist es möglich, zusätzlich zu dem Gaswechselhub einen weiteren, zusätzlichen Einlassventilhub mit nur einem Betätigungsnocken zu erzeugen. Besonders bevorzugt ist in diesem Fall dem Ventiltrieb eine hydraulische Unterbrechungseinrichtung zugeordnet, mit der es insbesondere möglich ist, die den separaten Ventilhubflächenbereichen zugeordneten Ventilhübe zu beeinflussen, und insbesondere auch wenigstens einen der Ventilhübe ganz entfallen zu lassen, d. h. einen der Ventilhubflächenbereiche inaktiv zu schalten.

Gemäß einer Weiterbildung der Erfindung ist vorgesehen, dass die Brennkraftmaschine einen Abgasturbolader mit einer Abgasturbine in einem Abgaspfad der Brennkraftmaschine und mit einem Frischmasseverdichter in einem Ladepfad der Brennkraftmaschine aufweist, wobei die Abgasturbine in für sich genommen bekannter Weise mit dem Frischmasseverdichter antriebswirkverbunden ist, sodass Enthalpie des Abgases genutzt werden kann, um Frischmasse in dem Ladepfad zu verdichten und derart den Ladedruck zu erhöhen. Die Brennkraftmaschine ist bevorzugt frei von einem die Abgasturbine und/oder den Frischmasseverdichter umgehenden Umgehungspfad. Eines solchen Umgehungspfads bedarf es insbesondere nicht mehr, da der Öffnungszeitpunkt des Einlassventils für die Lambdaregelung der Brennkraftmaschine als Stellgröße verwendet wird. Besonders bevorzugt weist die Brennkraftmaschine weder einen Umgehungspfad zur Umgehung der Abgasturbine noch einen Umgehungspfad zur Umgehung des Frischmasseverdichters, insbesondere also weder einen Turbinenbypass noch einen Verdichterbypass, auf.

Gemäß einer Weiterbildung der Erfindung ist vorgesehen, dass die Brennkraftmaschine einen Ladepfad aufweist, entlang dem Frischmasse, insbesondere Verbrennungsluft, förderbar ist, wobei der Ladepfad mit dem wenigstens einen Brennraum über das wenigstens eine Einlassventil zur Zuführung von Frischmasse in den wenigstens einen Brennraum strömungstechnisch verbunden ist. Dabei ist vorgesehen, dass der Ladepfad frei ist von einer Drosselklappe. Die Brennkraftmaschine weist bevorzugt keine Drosselklappe auf. Auf eine Drosselklappe kann in vorteilhafter Weise verzichtet werden, da der Öffnungszeitpunkt des Einlassventils als Stellgröße für die Lambdaregelung verwendet wird.

In vorteilhafter Weise können auch andere Regelorgane des Ladepfads entfallen, beispielsweise zusätzliche Klappen für ein Thermomanagement oder dergleichen.

Die Brennkraftmaschine ist vorzugsweise als Hubkolbenmotor ausgebildet. Es ist möglich, dass die Brennkraftmaschine zum Antrieb eines Personenkraftwagens, eines Lastkraftwagens oder eines Nutzfahrzeugs eingerichtet ist. Bei einem bevorzugten Ausführungsbeispiel dient die Brennkraftmaschine dem Antrieb insbesondere schwerer Land- oder Wasserfahrzeuge, beispielsweise von Minenfahrzeugen, Zügen, wobei die Brennkraftmaschine in einer Lokomotive oder einem Triebwagen eingesetzt wird, oder von Schiffen. Auch ein Einsatz der Brennkraftmaschine zum Antrieb eines der Verteidigung dienenden Fahrzeugs, beispielsweise eines Panzers, ist möglich. Ein Ausführungsbeispiel der Brennkraftmaschine wird vorzugsweise auch stationär, beispielsweise zur stationären Energieversorgung im Notstrombetrieb, Dauerlastbetrieb oder Spitzenlastbetrieb eingesetzt, wobei die Brennkraftmaschine in diesem Fall vorzugsweise einen Generator antreibt. Auch eine stationäre Anwendung der Brennkraftmaschine zum Antrieb von Hilfsaggregaten, beispielsweise von Feuerlöschpumpen auf Bohrinseln, ist möglich. Weiterhin ist eine Anwendung der Brennkraftmaschine im Bereich der Förderung fossiler Roh- und insbesondere Brennstoffe, beispielswiese Öl und/oder Gas, möglich. Auch eine Verwendung der Brennkraftmaschine im industriellen Bereich oder im Konstruktionsbereich, beispielsweise in einer Konstruktions- oder Baumaschine, zum Beispiel in einem Kran oder einem Bagger, ist möglich. Die Brennkraftmaschine ist vorzugsweise als Dieselmotor, als Benzinmotor, als Gasmotor zum Betrieb mit Erdgas, Biogas, Sondergas oder einem anderen geeigneten Gas, ausgebildet. Insbesondere wenn die Brennkraftmaschine als Gasmotor ausgebildet ist, ist sie für den Einsatz in einem Blockheizkraftwerk zur stationären Energieerzeugung geeignet.

Die Beschreibungen des Verfahrens einerseits und der Brennkraftmaschine andererseits sind komplementär zueinander zu verstehen. Merkmale der Brennkraftmaschine, die explizit oder implizit in Zusammenhang mit dem Verfahren erläutert wurden, sind bevorzugt einzeln oder miteinander kombiniert Merkmale eines bevorzugten Ausführungsbeispiels der Brennkraftmaschine. Verfahrensschritte, die explizit oder implizit in Zusammenhang mit der Brennkraftmaschine erläutert wurden, sind bevorzugt einzeln oder miteinander kombiniert Schritte einer bevorzugten Ausführungsform des Verfahrens. Dieses zeichnet sich bevorzugt durch wenigstens einen Verfahrensschritt aus, der durch wenigstens ein Merkmal eines erfindungsgemäßen oder bevorzugten Ausführungsbeispiels der Brennkraftmaschine bedingt ist. Die Brennkraftmaschine zeichnet sich bevorzugt durch wenigstens ein Merkmal aus, welches durch wenigstens einen Schritt einer erfindungsgemäßen oder bevorzugten Ausführungsform des Verfahrens bedingt ist.

Die Erfindung wird im Folgenden anhand der Zeichnung näher erläutert. Dabei zeigen:
- Figur 1: eine schematische Darstellung eines ersten Ausführungsbeispiels einer Brennkraftmaschine;
- Figur 2: eine schematische Detaildarstellung eines zweiten Ausführungsbeispiels einer Brennkraftmaschine;
- Figur 3: eine schematische Detaildarstellung eines dritten Ausführungsbeispiels einer Brennkraftmaschine, und
- Figur 4: eine schematische, diagrammatische Darstellung einer Funktionsweise des zweiten und dritten Ausführungsbeispiels der Brennkraftmaschine gemäß den Figuren 2 und 3.

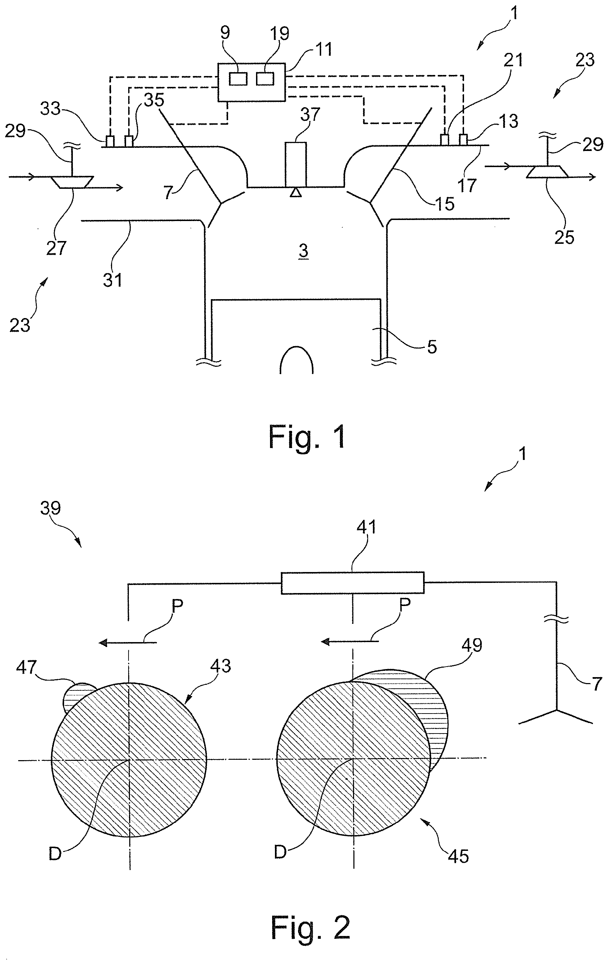

**Fig.** 1 zeigt eine schematische Darstellung eines ersten Ausführungsbeispiels einer Brennkraftmaschine 1, die wenigstens einen Brennraum 3 aufweist. Die Brennkraftmaschine 1 ist als Hubkolbenmotor ausgebildet, wobei in dem Brennraum 3 ein Kolben 5 zwischen einem oberen Totpunkt und einem unteren Totpunkt hubbeweglich angeordnet ist.

Dem Brennraum 3 ist ein Einlassventil 7 zur Zuführung von Frischmasse, insbesondere von Verbrennungsluft, in den wenigstens einen Brennraum 3 zugeordnet.

Die Brennkraftmaschine 1 weist außerdem eine Lambdawert-Einstelleinrichtung 9 auf, die eingerichtet ist, um einen Lambdawert für eine Verbrennung in dem wenigstens einen Brennraum 3 einzustellen. Bei dem hier dargestellten Ausführungsbeispiel ist die Lambdawert-Einstelleinrichtung 9 vorzugsweise Teil eines Steuergeräts 11, oder die Funktionalität der Lambdawert-Einstelleinrichtung 9 ist in das Steuergerät 11 implementiert, beispielsweise in Form eines Softwaremoduls oder dergleichen. Die Lambdawert-Einstelleinrichtung 9 ist mit dem wenigstens einen Einlassventil 7 wirkverbunden und eingerichtet, um einen Ist-Lambdawert für den wenigstens einen Brennraum 3 durch das Bestimmen eines Öffnungszeitpunkts für das wenigstens eine Einlassventil 7 einzustellen.

Bevorzugt wird mittels der Lambdawert-Einstelleinrichtung 9 ein Soll-Lambdawert - vorzugsweise betriebspunktabhängig - bestimmt, und es wird ein Ist-Lambdawert für eine Verbrennung in dem Brennraum 3 gemessen. Hierzu weist die Brennkraftmaschine 1 bevorzugt eine Lambdasonde 13 in einem über wenigstens ein Auslassventil 15 mit dem Brennraum 3 strömungstechnisch verbundenen Abgaspfad 17 auf. Die Lambdasonde 13 ist mit der Lambdawert-Einstelleinrichtung 9 zur Ermittlung des momentanen Ist-Lambdawerts wirkverbunden. Mittels der Lambdawert-Einstelleinrichtung 9 wird ein Öffnungszeitpunkt für das Einlassventil 7 in Abhängigkeit von dem Soll-Lambdawert und dem Ist-Lambdawert bestimmt, und das Einlassventil 7 wird zu dem bestimmten Öffnungszeitpunkt geöffnet. Insbesondere ist die Lambdawert-Einstelleinrichtung 9 eingerichtet zur Regelung des Lambdawerts, d. h. zur Lambdaregelung, wobei der Öffnungszeitpunkt des Einlassventils 7 bevorzugt als Stellgröße verwendet wird, um den Ist-Lambdawert auf den Soll-Lambdawert einzuregeln.

Die Brennkraftmaschine 1 weist eine Stickoxidanteil-Einstelleinrichtung 19 auf, die ebenfalls Teil des Steuergeräts 11 ist, oder - insbesondere als Software-Modul - in diese implementiert ist, wobei die Stickoxidanteil-Einstelleinrichtung 19 eingerichtet ist, um einen Stickoxid-Anteil im Abgas der Verbrennung in dem wenigstens einen Brennraum 3 einzustellen. Die Stickoxidanteil-Einstelleinrichtung 19 ist ebenfalls mit dem wenigstens einen Einlassventil 7 wirkverbunden und eingerichtet, um einen Ist-Stickoxidanteil für den wenigstens einen Brennraum durch Variation eines Schließzeitpunkts des wenigstens einen Einlassventils 7 einzustellen. Insbesondere ist die Stickoxidanteil-Einstelleinrichtung 19 eingerichtet, um die Stickoxid-Emissionen der Brennkraftmaschine 1 mittels des Schließzeitpunkts des Einlassventils 7 als Stellgröße zu regeln.

Dabei ist die Stickoxidanteil-Einstelleinrichtung 19 bevorzugt eingerichtet, um einen Soll-Stickoxidanteil - vorzugsweise betriebspunktabhängig - für das Abgas der Verbrennung in dem Brennraum 3 zu bestimmen, und um einen Ist-Stickoxidanteil in dem Abgas zu messen. Hierzu ist in dem Abgaspfad 17 vorzugsweise ein Stickoxidsensor 21 angeordnet, der mit der Stickoxidanteil-Einstelleinrichtung 19 wirkverbunden ist, um den momentanen Ist-Stickoxidanteil zu erfassen. Mittels der Stickoxidanteil-Einstelleinrichtung 19 wird dann ein Schließzeitpunkt für das Einlassventil 7 in Abhängigkeit von dem Soll-Stickoxidanteil und dem momentanen Ist-Stickoxidanteil bestimmt, und das Einlassventil 7 wird zu dem bestimmten Schließzeitpunkt geschlossen. Auf diese Weise kann der Ist-Stickoxidanteil auf den Soll-Stickoxidanteil eingeregelt werden, indem der Schließzeitpunkt des Einlassventils 7 als Stellgröße verwendet wird.

Mit der Lambdawert-Einstelleinrichtung 9 wird bevorzugt der Öffnungszeitpunkt des Einlassventils 7 innerhalb eines Ansaugtakts des wenigstens einen Brennraums 3 zur Verringerung des Ist-Lambdawerts nach spät und zur Erhöhung des Ist-Lambdawerts nach früh verstellt. Alternativ oder zusätzlich wird bevorzugt ein zusätzlicher Einlassventilhub zusätzlich zu einem Gaswechselhub des Einlassventils 7 durchgeführt, sodass der durch die Lambdawert-Einstelleinrichtung 9 bestimmte Öffnungszeitpunkt dem zusätzlichen Einlassventilhub zugeordnet ist, wobei ein Öffhungshub des Einlassventils 7 zu dem Öffnungszeitpunkt außerhalb des Ansaugtakts, insbesondere in einem Auslasstakt und/oder in einem Verdichtungstakt des Brennraums 3 durchgeführt wird. Dabei ist es auch möglich, dass die Lambdawert-Einstelleinrichtung 9 eingerichtet ist, um einen dem zusätzlichen Einlassventilhub zugeordneten Schließzeitpunkt zum Zweck der Lambdaregelung zu variieren.

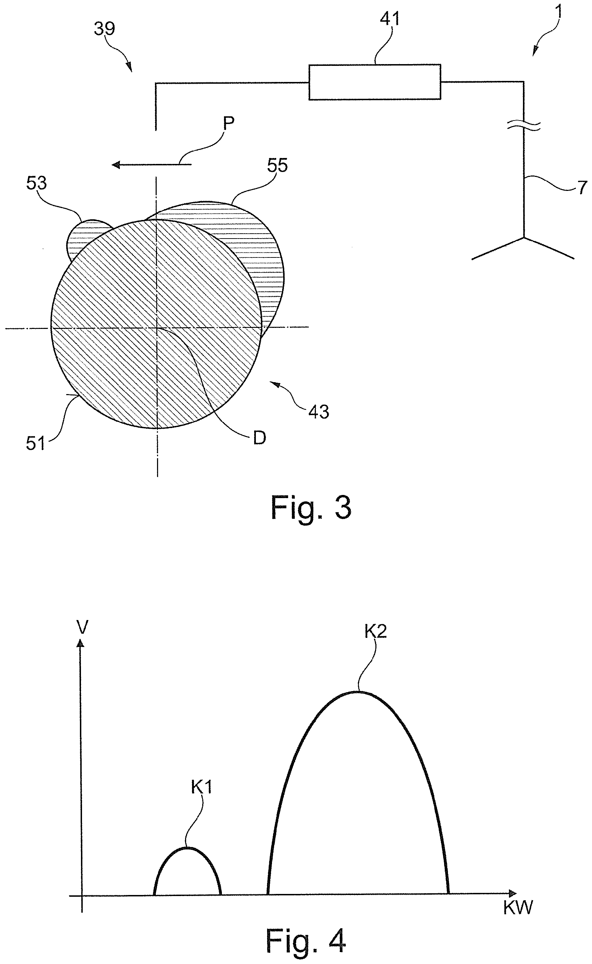

Dem wenigstens einen Einlassventil 7 ist bevorzugt ein in den Figuren 2 und 3 dargestellter Ventiltrieb zugeordnet, der eine hydraulische Unterbrechungseinrichtung, insbesondere ein sogenanntes Lost Motion-System aufweist.

Dem wenigstens einen Einlassventil 7 sind vorzugsweise wenigstens zwei in Figur 2 dargestellte Betätigungsnocken zugeordnet, die zueinander phasenverschobene Betätigungskonturen aufweisen. Alternativ oder zusätzlich ist dem wenigstens einen Einlassventil 7 bevorzugt ein in Figur 3 dargestellter Betätigungsnocken, insbesondere genau ein und nur ein Betätigungsnocken, zugeordnet, der an seiner Umfangsfläche zwei separate Ventilhubflächenbereiche aufweist. Auf diese Weise können voneinander separate Ventilhübe des Einlassventils 7 mit einem einzigen Betätigungsnocken durchgeführt werden, wobei die Ventilhübe durch eine hydraulische Unterbrechungseinrichtung beeinflusst und auch jeweils deaktiviert werden können.

Die Brennkraftmaschine 1 weist außerdem einen Abgasturbolader 23 mit einer Abgasturbine 25 und einem Frischmasseverdichter 27 auf, wobei die Abgasturbine 25 vorzugsweise über eine hier nur schematisch dargestellte Welle 29 mit dem Frischmasseverdichter 27 antriebswirkverbunden ist.

Dabei ist die Brennkraftmaschine 1 frei von einem die Abgasturbine 25 umgehenden Umgehungspfad. Zusätzlich oder alternativ ist die Brennkraftmaschine 1 frei von einem den Frischmasseverdichter 27 umgehenden Umgehungspfad.

Die Brennkraftmaschine 1 weist außerdem einen Ladepfad 31 auf, entlang dem Frischmasse förderbar ist, wobei der Ladepfad 31 mit dem Brennraum 3 über das Einlassventil 7 zur Zuführung von Frischmasse in den wenigstens einen Brennraum 3 strömungstechnisch verbunden ist. Der Ladepfad 31 dabei frei von einer Drosselklappe.

Vorzugsweise weist der Ladepfad 31 keinerlei Ladepfad-Regelorgane auf, insbesondere keine Klappen, insbesondere weder eine Drosselklappe noch zusätzliche Klappen, beispielsweise für ein Thermomanagement.

In dem Ladepfad 31 sind vorzugsweise ein Ladedrucksensor 33 und ein Ladeluft-Temperatursensor 35 angeordnet, die mit dem Steuergerät 11 und insbesondere mit der Lambdawert-Einstelleinrichtung 9 wirkverbunden sind. Mithilfe des erfassten Ladedrucks und der erfassten Ladelufttemperatur ist es insbesondere möglich zu bestimmen, welche Luftmasse abhängig von einem Öffnungsverhalten des wenigstens einen Einlassventils 7 dem Brennraum 3 tatsächlich zugeführt wird. Die Messwerte des Ladedrucksensors 33 und des Ladeluft-Temperatursensors 35 werden bevorzugt zur Lambdaregelung durch die Lambdawert-Einstelleinrichtung 9 herangezogen.

Die Brennkraftmaschine 1 weist außerdem bevorzugt einen dem Brennraum 3 zugeordneten Injektor 37 zu Direkteinspritzung von Brennstoff in den Brennraum 3 auf. In diesem Fall ist es möglich, entlang des Ladepfads 31 dem Brennraum 3 reine Ladelufttemperatur - ohne Brennstoff - zuzuführen, wobei der Brennstoff separat und direkt über den Injektor 37 in den Brennraum 3 eingebracht wird. Dies ermöglicht eine besonders genaue und einfache Lambdaregelung über den Öffnungszeitpunkt des Einlassventils 7.

**Fig.** 2 zeigt eine schematische Detaildarstellung eines zweiten Ausführungsbeispiels der Brennkraftmaschine 1. Gleiche und funktionsgleiche Elemente sind mit gleichen Bezugszeichen versehen, sodass insofern auf die vorangegangene Beschreibung verwiesen wird. Insbesondere zeigt Figur 2 einen Ventiltrieb 39, der eine hydraulische Unterbrechungseinrichtung 41 aufweist. Diese ist insbesondere als sogenanntes Lost-Motion-System ausgebildet, wobei solche hydraulischen Unterbrechungseinrichtungen 41 und entsprechende Ventiltriebe 39 für sich genommen bekannt sind, sodass hierauf nicht weiter im Detail eingegangen wird.

Der Ventiltrieb 39 ist mit dem Einlassventil 7 wirkverbunden, um insbesondere einen variablen Einlasshub des Einlassventils 7 zu bewirken.

Dabei sind dem Einlassventil 7 und insbesondere dem Ventiltrieb 39 bei dem zweiten Ausführungsbeispiel gemäß Figur 2 zwei Betätigungsnocken zugeordnet, nämlich ein erster Betätigungsnocken 43 und ein zweiter Betätigungsnocken 45, die sich im Betrieb der Brennkraftmaschine 1 um eine Drehachse D in definierter Richtung, hier entgegen dem Uhrzeigersinn in Richtung eines Pfeils P, drehen. Die Betätigungsnocken 43, 45 wirken dabei in für sich genommen bekannter Weise mit dem Ventiltrieb 39 zur Ansteuerung des Einlassventils 7, insbesondere zum Bewirken von Ventilhüben des Einlassventils 7, zusammen.

Dabei weisen die Betätigungsnocken 43, 45 zueinander phasenverschobene Betätigungskonturen auf, wobei nämlich der erste Betätigungsnocken 43 eine erste Betätigungskontur 47 aufweist, und wobei der zweite Betätigungsnocken 45 eine zweite Betätigungskontur 49 aufweist. Die Betätigungskonturen 47, 49 sind hier voneinander verschieden ausgebildet, bewirken also auch verschieden ausgestaltete Einlassventilhübe des Einlassventils 7, wobei sie diese zu verschiedenen Zeiten bewirken, da sie zueinander phasenverschoben an den Betätigungsnocken 43, 45 angeordnet sind.

Fig. 3 zeigt eine schematische Detailansicht eines dritten Ausführungsbeispiels der Brennkraftmaschine 1. Gleiche und funktionsgleiche Elemente sind mit gleichen Bezugszeichen versehen, sodass insofern auf die vorangegangene Beschreibung verwiesen wird. Das hier dargestellte, dritte Ausführungsbeispiel unterscheidet sich von dem zweiten Ausführungsbeispiel gemäß Figur 2 dadurch, dass hier nur ein Betätigungsnocken 43 vorgesehen ist, der an seiner Umfangsfläche 51 zwei separate Ventilhubflächenbereiche, nämlich einen ersten Ventilhubflächenbereich 53 und einen zweiten Ventilhubflächenbereich 55, aufweist. Dabei entspricht hier der erste Ventilhubflächenbereich 53 der ersten Betätigungskontur 47 gemäß Figur 2, wobei der zweite Ventilhubflächenbereich 55 der zweiten Betätigungskontur 49 gemäß Figur 2 entspricht. Mithilfe des einen, zwei Ventilhubflächenbereiche 53, 55 aufweisenden Betätigungsnockens 43 können separate Ventilhübe des Einlassventils 7 durchgeführt werden, wie dies auch mit den beiden Betätigungsnocken 43, 45 bei dem zweiten Ausführungsbeispiel gemäß Figur 2 möglich ist, wobei jedoch bei dem Ausführungsbeispiel gemäß Figur 3 ein Betätigungsnocken eingespart werden kann.

Fig. 4 zeigt eine schematische, diagrammatische Darstellung einer Funktionsweise des zweiten Ausführungsbeispiels und des dritten Ausführungsbeispiels gemäß den Figuren 2 und 3. Dabei ist hier ein Ventilhub V aufgetragen gegen den Kurbelwellenwinkel KW. Eine erste Ventilhubkurve K1 beschreibt einen ersten Einlassventilhub des Einlassventils 7, der durch die erste Betätigungskontur 47 oder den ersten Ventilhubflächenbereich 53 bewirkt wird, und der dem zuvor erläuterten, zusätzlichen Einlassventilhub entspricht.

Eine zweite Ventilhubkurve K2 beschreibt einen zweiten Einlassventilhub des Einlassventils 7, welcher dem Haupt-Einlassventilhub entspricht, und welcher durch die zweite Betätigungskontur 49 oder den zweiten Ventilhubflächenbereich 55 bewirkt wird.

Anhand des Diagramms gemäß Figur 4 wird nochmals deutlich, dass mittels der voneinander verschieden ausgebildeten Betätigungskonturen 47, 49 oder der verschieden ausgebildeten Ventilhubflächenbereiche 53, 55 voneinander separate, verschiedene Ventilhübe des Einlassventils 7 durchgeführt werden können, insbesondere ein Haupt-Einlassventilhub sowie ein Vor-Einlassventilhub, der dem zuvor erläuterten zusätzlichen Einlassventilhub entspricht.

Insgesamt zeigt sich, dass mit der hier vorgeschlagenen Brennkraftmaschine 1 sowie dem Verfahren eine vereinfachte und bezüglich der verwendeten Bauteile reduzierte Vorgehensweise zur zumindest weitgehenden Entkoppelung einer Lambdaregelung von einer Stickoxid-Emissionsregelung erreicht werden kann.

## Patentansprüche

1. Verfahren zum Betreiben einer Brennkraftmaschine (1), mit folgenden Schritten:
- Bestimmen eines Soll-Lambdawerts und Messen eines Ist-Lambdawerts für eine Verbrennung in einem Brennraum (3) einer Brennkraftmaschine (1);
- Bestimmen eines Öffnungszeitpunkts für ein dem Brennraum (3) zugeordnetes Einlassventil (7) in Abhängigkeit von dem Soll-Lambdawert und dem Ist-Lambdawert, und
- Öffnen des Einlassventils (7) zu dem bestimmten Öffnungszeitpunkt,
**gekennzeichnet durch** folgende weitere Schritte:
- Bestimmen eines Soll-Stickoxidanteils für das Abgas der Verbrennung in dem Brennraum (3) und Messen eines Ist-Stickoxidanteils in dem Abgas;
- Bestimmen eines Schließzeitpunkts für das Einlassventil (7) in Abhängigkeit von dem Soll-Stickoxidanteil und von dem Ist-Stickoxidanteil, und
- Schließen des Einlassventils (7) zu dem bestimmten Schließzeitpunkt, wobei
- eine kaskadierte Regelung oder eine kombinierte Mehrgrößenregelung derart durchgeführt wird, dass
- zunächst durch Variation des Öffnungszeitpunkts die Lambdaregelung eingeregelt wird, wobei danach, bei festgehaltenem Öffnungszeitpunkt des Einlassventils,
- die Stickoxid-Regelung durch Variation des Schließzeitpunkts des Einlassventils eingeregelt wird.

2. Verfahren nach Anspruch 1, **dadurch gekennzeichnet, dass**
a) der bestimmte Öffnungszeitpunkt innerhalb eines Ansaugtakts des Brennraums (3) zur Verringerung des Ist-Lambdawerts nach spät und zur Erhöhung des Ist-Lambdawerts nach früh verstellt wird, und/oder oder dass
b) der bestimmte Öffnungszeitpunkt einem zusätzlich zu einem Gaswechselhub des Einlassventils (7) durchgeführten Einlassventilhub zugeordnet ist, wobei der bestimmte Öffnungszeitpunkt außerhalb des Ansaugtakts, insbesondere in einem Auslasstakt und/oder in einem Verdichtungstakt des Brennraums (3) gewählt wird.

3. Brennkraftmaschine (1), mit
- wenigstens einem Brennraum (3), dem wenigstens ein Einlassventil (7) zur Zuführung von Frischmasse in den wenigstens einen Brennraum (3) zugeordnet ist, und mit
- einer Lambdawert-Einstelleinrichtung (9), die eingerichtet ist, um einen Lambdawert für eine Verbrennung in dem wenigstens einen Brennraum (3) einzustellen, wobei
- die Lambdawert-Einstelleinrichtung (9) mit dem wenigstens einen Einlassventil (7) wirkverbunden und eingerichtet ist, um einen Ist-Lambdawert für den wenigstens einen Brennraum (3) durch Bestimmen eines Öffnungszeitpunkts des wenigstens einen Einlassventils (7) einzustellen,
**gekennzeichnet durch**
- eine Stickoxidanteil-Einstelleinrichtung (19), die eingerichtet ist, um einen Stickoxid-Anteil für Abgas der Verbrennung in dem wenigstens einen Brennraum (3) einzustellen, wobei die Stickoxidanteil-Einstelleinrichtung (19) mit dem wenigstens einen Einlassventil (7) wirkverbunden und eingerichtet ist, um einen Ist-Stickoxidanteil für den wenigstens einen Brennraum (3) durch Variation eines Schließzeitpunkts des wenigstens einen Einlassventils (7) einzustellen, wobei
- die Brennkraftmaschine (1) eingerichtet ist zur Durchführung einer kaskadierten Regelung oder einer kombinierten Mehrgrößenregelung, derart, dass
- zunächst durch Variation des Öffnungszeitpunkts die Lambdaregelung eingeregelt wird, wobei danach, bei festgehaltenem Öffnungszeitpunkt des Einlassventils,
- die Stickoxid-Regelung durch Variation des Schließzeitpunkts des Einlassventils eingeregelt wird.

4. Brennkraftmaschine (1) nach Anspruch 3, **dadurch gekennzeichnet, dass** die Lambdawert-Einstelleinrichtung (9) eingerichtet ist, um den Öffnungszeitpunkt des Einlassventils (7) innerhalb eines Ansaugtakts des wenigstens einen Brennraums (3) zur Verringerung des Ist-Lambdawerts nach spät und zur Erhöhung des Ist-Lambdawerts nach früh zu verstellen, und/oder um einen zusätzlichen Einlassventilhub zusätzlich zu einem Gaswechselhub des Einlassventils (7) durchzuführen, so dass der durch die Lambdawert-Einstelleinrichtung bestimmte Öffnungszeitpunkt dem zusätzlichen Einlassventilhub zugeordnet ist, wobei ein Öffnungshub des Einlassventils (7) zu dem Öffnungszeitpunkt außerhalb des Ansaugtakts, insbesondere in einem Auslasstakt und/oder in einem Verdichtungstakt des Brennraums (3) durchgeführt wird.

5. Brennkraftmaschine (1) nach einem der Ansprüche 3 oder 4, **dadurch gekennzeichnet, dass** dem wenigstens einen Einlassventil (7) ein Ventiltrieb (39) zugeordnet ist, der eine hydraulische Unterbrechungseinrichtung (41) aufweist, wobei die hydraulische Unterbrechungseinrichtung (41) eingerichtet ist, um eine Wirkverbindung zwischen einem Betätigungsmittel für das Einlassventil (7) und dem Einlassventil (7) zeitweise zu unterbrechen.

6. Brennkraftmaschine (1) nach einem der Ansprüche 3 bis 5, **dadurch gekennzeichnet, dass** dem wenigstens einen Einlassventil (7)
a) wenigstens zwei Betätigungsnocken (43,45) zugeordnet sind, die zueinander phasenverschobene Betätigungskonturen(47,49) aufweisen, und/oder
b) ein Betätigungsnocken (43) zugeordnet ist, der an seiner Umfangsfläche (51) zwei separate Ventilhubflächenbereiche (53,55) aufweist.

7. Brennkraftmaschine (1) nach einem der Ansprüche 3 bis 6, **gekennzeichnet durch** einen Abgasturbolader (23) mit einer Abgasturbine (25) und einem Frischmasseverdichter (27), wobei Brennkraftmaschine (1) frei ist von einem die Abgasturbine (25) und/oder den Frischmasseverdichter (27) umgehenden Umgehungspfad.

8. Brennkraftmaschine (1) nach einem der Ansprüche 3 bis 7, **gekennzeichnet durch** einen Ladepfad (31), entlang dem Frischmasse förderbar ist, wobei der Ladepfad (31) mit dem wenigstens einen Brennraum (3) über das wenigstens eine Einlassventil (7) zur Zuführung von Frischmasse in den wenigstens einen Brennraum (3) strömungstechnisch verbunden ist, wobei der Ladepfad (31) frei ist von einer Drosselklappe.

## Claims

1. Method for operating an internal combustion engine (1), comprising the following steps:
- determining a target lambda value and measuring an actual lambda value for combustion in a combustion chamber (3) of an internal combustion engine (1);
- determining an opening time for an intake valve (7) associated with the combustion chamber (3) as a function of the target lambda value and the actual lambda value, and
- opening the intake valve (7) at the determined opening time,
**characterised by** the following further steps:
- determining a target nitrogen oxide amount for the exhaust gas of the combustion in the combustion chamber (3) and measuring an actual nitrogen oxide amount in the exhaust gas;
- determining a closing timing for the intake valve (7) as a function of the target nitrogen oxide amount and the actual nitrogen oxide amount, and
- closing the intake valve (7) at the determined closing time, wherein
- a cascaded control or a combined multi-variable control is carried out in such a way that
- the lambda control is first adjusted by varying the opening time, wherein thereafter with the opening time of the intake valve (7) held fixed
- the nitrogen oxide control is then adjusted by varying the closing time of the intake valve.

2. Method according to claim 1, **characterised in that**
a) the determined opening time is adjusted to late within an intake cycle of the combustion chamber (3) to reduce the actual lambda value and to increase the actual lambda value to early, and/or **in that**
b) the specific opening time is assigned to an intake valve stroke carried out in addition to a gas exchange stroke of the intake valve (7), wherein the specific opening time is selected outside the intake stroke, in particular in an exhaust stroke and/or in a compression stroke of the combustion chamber (3).

3. Internal combustion engine (1), with
- at least one combustion chamber (3), with which at least one intake valve (7) is associated for feeding fresh mass into the at least one combustion chamber (3), and with
- a lambda value adjusting device (9) which is arranged to adjust a lambda value for combustion in the at least one combustion chamber (3), wherein
- the lambda value adjusting device (9) is operatively connected to the at least one intake valve (7) and is arranged to adjust an actual lambda value for the at least one combustion chamber (3) by determining an opening time of the at least one intake valve (7),
**characterised by**
- a nitrogen oxide amount adjusting device (19) arranged to adjust a nitrogen oxide amount for exhaust gas of the combustion in the at least one combustion chamber (3), wherein the nitrogen oxide amount adjusting device (19) is operatively connected to the at least one intake valve (7) and arranged to adjust an actual nitrogen oxide amount for the at least one combustion chamber (3) by varying a closing timing of the at least one intake valve (7), wherein
- the internal combustion engine (1) is arranged to carry out a cascaded control or a combined multi-variable control in such a way that
- the lambda control is first adjusted by varying the opening time, wherein thereafter with the opening time of the intake valve (7) held fixed
- the nitrogen oxide control is adjusted by varying the closing time of the intake valve.

4. Internal combustion engine (1) according to claim 3, **characterized in that** the lambda value adjusting device (9) is arranged to adjust the opening timing of the intake valve (7) within an intake stroke of the at least one combustion chamber (3) to reduce the actual lambda value to late and to increase the actual lambda value to early, and/or in order to carry out an additional intake valve stroke in addition to a gas exchange stroke of the intake valve (7), so that the opening time determined by the lambda value adjusting device is assigned to the additional intake valve stroke, wherein an opening stroke of the intake valve (7) is carried out at the opening time outside the intake stroke, in particular in an exhaust stroke and/or in a compression stroke of the combustion chamber (3).

5. Internal combustion engine (1) according to one of claims 3 or 4, **characterized in that** the at least one intake valve (7) is assigned a valve train (39) which has a hydraulic interruption device (41), wherein the hydraulic interruption device (41) is arranged to temporarily interrupt an operative connection between an actuating means for the intake valve (7) and the intake valve (7).

6. Internal combustion engine (1) according to one of the claims 3 to 5, **characterised in that** the at least one intake valve (7) has
a) at least two actuating cams (43, 45) being associated with the at least one intake valve (7), which cams have actuating contours (47, 49) that are phase-shifted relative to one another, and/or
b) an actuating cam (43) being associated with the at least one intake valve (7), which cam has two separate valve stroke surface areas (53, 55) on its circumferential surface (51).

7. Internal combustion engine (1) according to one of claims 3 to 6, **characterised by** an exhaust gas turbocharger (23) with an exhaust gas turbine (25) and a fresh mass compressor (27), wherein internal combustion engine (1) is free of a bypass path bypassing the exhaust gas turbine (25) and/or the fresh mass compressor (27).

8. Internal combustion engine (1) according to one of claims 3 to 7, **characterized by** a charging path (31) along which fresh mass can be conveyed, wherein the charging path (31) is fluidically connected to the at least one combustion chamber (3) via the at least one intake valve (7) for supplying fresh mass into the at least one combustion chamber (3), wherein the charging path (31) is free of a throttle valve.

## Revendications

1. Procédé pour faire fonctionner un moteur à combustion interne (1), comprenant les étapes suivantes :
- détermination d'une valeur lambda de consigne et mesure d'une valeur lambda réelle pour une combustion dans une chambre de combustion (3) d'un moteur à combustion interne (1) ;
- détermination d'un moment d'ouverture pour une soupape d'admission (7) associée à la chambre de combustion (3) en fonction de la valeur lambda de consigne et de la valeur lambda réelle, et
- ouverture de la soupape d'admission (7) au moment d'ouverture déterminé, **caractérisé par** les étapes additionnelles :
- détermination d'une proportion d'oxyde d'azote de consigne pour les gaz d'échappement de la combustion dans la chambre de combustion (3) et mesure d'une proportion d'oxyde d'azote réel dans les gaz d'échappement ;
- détermination d'un moment de fermeture pour la soupape d'admission (7) en fonction de la proportion d'oxyde d'azote de consigne et de la proportion d'oxyde d'azote réelle, et
- fermeture de la soupape d'admission (7) au moment de fermeture déterminé, dans lequel
- une régulation en cascade ou une régulation combinée à plusieurs grandeurs est effectuée de telle sorte que
- tout d'abord, la régulation lambda est réglée par la variation du moment d'ouverture, ensuite, lorsque le moment d'ouverture de la soupape d'admission est maintenu,
- la régulation des oxydes d'azote est réglée par la variation du moment de fermeture de la soupape d'admission.

2. Procédé selon la revendication 1, **caractérisé en ce que**
a) le moment d'ouverture déterminé est réglé au cours d'une course d'aspiration de la chambre de combustion (3) pour réduire la valeur lambda réelle vers le retard et pour augmenter la valeur lambda réelle vers l'avance, et/ou que
b) le moment d'ouverture déterminé est associé à une levée de soupape d'admission effectuée en plus d'une levée d'échange de gaz de la soupape d'admission (7), le moment d'ouverture déterminé étant choisi en dehors de la course d'aspiration, en particulier dans une course de décharge et/ou dans une course de compression de la chambre de combustion (3).

3. Moteur à combustion interne (1), avec
- au moins une chambre de combustion (3), à laquelle est associée au moins une soupape d'admission (7) pour l'amenée de masse fraîche dans la au moins une chambre de combustion (3), et avec
- un dispositif de réglage de la valeur lambda (9), qui est conçu pour régler une valeur lambda pour une combustion dans la au moins une chambre de combustion (3), dans lequel
- le dispositif de réglage de la valeur lambda (9) est en liaison active avec la au moins une soupape d'admission (7) et est conçu pour régler une valeur lambda réelle pour la au moins une chambre de combustion (3) en déterminant un moment d'ouverture de la au moins une soupape d'admission (7),
**caractérisé par**
- un dispositif de réglage de la proportion d'oxyde d'azote (19) qui est conçu pour régler une proportion d'oxyde d'azote pour les gaz d'échappement de la combustion dans la au moins une chambre de combustion (3), le dispositif de réglage de la proportion d'oxyde d'azote (19) étant en liaison active à la au moins une soupape d'admission (7) et étant conçu pour régler une proportion d'oxyde d'azote réelle pour la au moins une chambre de combustion (3) par la variation du moment de fermeture de la au moins une soupape d'admission (7), dans lequel
- le moteur à combustion interne (1) est conçu pour réaliser une régulation en cascade ou une régulation combinée à plusieurs grandeurs, de telle sorte que
- tout d'abord, la régulation lambda est réglée par la variation du moment d'ouverture, ensuite, lorsque le moment d'ouverture de la soupape d'admission est maintenu,
- la régulation des oxydes d'azote est réglée par la variation du moment de fermeture de la soupape d'admission.

4. Moteur à combustion interne (1) selon la revendication 3, **caractérisé en ce que** le dispositif de réglage de la valeur lambda (9) est conçu pour régler le moment d'ouverture de la soupape d'admission (7) au cours d'une cours d'aspiration de la au moins une chambre de combustion (3) pour réduire la valeur lambda réelle vers le retard et pour augmenter la valeur lambda réelle vers l'avance, et/ou pour effectuer une levée de la soupape d'admission additionnelle en plus d'une levée d'échange de gaz de la soupape d'admission (7), de sorte que le moment d'ouverture déterminé par le dispositif de réglage de la valeur lambda est associé à la levée de la soupape d'admission additionnelle, une levée d'ouverture de la soupape d'admission (7) étant effectuée au moment d'ouverture en dehors de la course d'aspiration, en particulier dans une course de décharge et/ou dans une course de compression de la chambre de combustion (3).

5. Moteur à combustion interne (1) selon l'une des revendications 3 ou 4, **caractérisé en ce qu'**à la au moins une soupape d'admission (7) est associée une commande de soupape (39) qui présente un dispositif d'interruption hydraulique (41), le dispositif d'interruption hydraulique (41) étant conçu pour interrompre temporairement une liaison active entre un moyen d'actionnement pour la soupape d'admission (7) et la soupape d'admission (7).

6. Moteur à combustion interne (1) selon l'une des revendications 3 à 5, **caractérisé en ce que** la au moins une soupape d'admission (7) est dotée
a) d'au moins deux cames d'actionnement (43, 45), qui présentent des contours d'actionnement (47, 49) déphasés l'un par rapport à l'autre, et/ou
b) d'une came d'actionnement (43), qui présente sur sa surface périphérique (51) deux zones de surface de levée de soupape séparées (53, 55).

7. Moteur à combustion interne (1) selon l'une des revendications 3 à 6, **caractérisé par** un turbocompresseur à gaz d'échappement (23) avec une turbine à gaz d'échappement (25) et un compresseur de masse fraîche (27), le moteur à combustion interne (1) étant exempt d'un chemin de dérivation contournant la turbine à gaz d'échappement (25) et/ou le compresseur de masse fraîche (27).

8. Moteur à combustion interne (1) selon l'une des revendications 3 à 7, **caractérisé par** un chemin de chargement (31) le long duquel la masse fraîche peut être transportée, le chemin de chargement (31) étant relié fluidiquement à la au moins une chambre de combustion (3) par l'intermédiaire de la au moins une soupape d'admission (7) pour l'amenée de la masse fraîche dans la au moins une chambre de combustion (3), le chemin de chargement (31) étant exempt d'un clapet d'étranglement.
